**Europäisches Patentamt**

**European Patent Office**

**Office européen des brevets**

(19)

(11) Numéro de publication : **0 491 640 A1**

(12)

# DEMANDE DE BREVET EUROPEEN

(21) Numéro de dépôt : **91470037.2**

(22) Date de dépôt : **03.12.91**

(51) Int. Cl.$^5$ : **C23G 1/36**

(30) Priorité : **13.12.90 FR 9015621**

(43) Date de publication de la demande :
**24.06.92 Bulletin 92/26**

(84) Etats contractants désignés :
**AT BE CH DE DK ES FR GB GR IT LI LU NL SE**

(71) Demandeur : **SOLLAC S.A.**
**Immeuble Elysées-la-Défense, 29, Le Parvis la Défense**
**F-92800 PUTEAUX (FR)**

(72) Inventeur : **Pavinato, Albert**
**2, rue du Luxembourg**
**F-54490 Piennes (FR)**
Inventeur : **Pazdej, Richard**
**22, rue Pasteur**
**F-57210 Maizieres-Lès-Metz (FR)**
Inventeur : **Nicolle, Rémy**
**1, rue Kennedy**
**F-57210 Maizieres-Lès-Metz (FR)**

(74) Mandataire : **Ventavoli, Roger**
**TECHMETAL PROMOTION Domaine de l'IRSID Voie romaine BP 321**
**F-57213 Maizières-lès-Metz Cédex (FR)**

(54) **Procédé de séparation des composés de silicium contenus dans un bain de décapage chlorhydrique de pièces notamment des tôlesd'acier.**

(57)    Ce procédé dans lequel le bain usé est recyclé après concentration (1) par élimination d'eau (2), suivie d'un traitement en vue de la récupération (10) des oxydes de fer, est caractérisé selon l'invention en ce que l'on effectue une microfiltration tangentielle (5) du bain concentré afin d'en séparer les composés du silicium sous forme non-ionique et ainsi les concentrer et que l'on fait recirculer la majeure partie de la fraction de ce bain (11-17) contenant ces composés de silicium concentrés pour favoriser la précipitation des composés non-ioniques du silicium.

**EP 0 491 640 A1**

La présente invention concerne un procédé de séparation des composés de silicium contenus dans un bain-de décapage chlorhydrique de pièces métalliques, notamment des pièces en acier telles que des tôles.

Ces bains usés, qui peuvent être recyclés après concentration, traitements divers et régénération, contiennent des composés du silicium et des composés du fer, ces derniers ayant de nombreuses applications industrielles.

EP-A-0 141 034 décrit un procédé de séparation de composés siliciques d'un bain usé de décapage d'aciers au moyen d'un filtre comprenant un matériau absorbant les composés siliciques. Ce procédé nécessite un volume important de matériau absorbant par rapport au volume de bain usé devant être traité et, de plus, le silicium restant sous forme ionique n'est pas filtrable.

Le but de la présente invention est de fournir un procédé permettant de séparer les composés de silicium des bains de décapage, afin d'en récupérer des oxydes de fer suffisamment purs pour être valorisés.

Les bains usés issus de la ligne de décapage de tôles par l'acide chlorhydrique contiennent en général de 120 à 150 g/l de fer, ainsi que de 30 à 40 mg/l de silicium dont environ 90% se trouve sous forme ionique, non filtrable. La fraction non-ionique est essentiellement composé de formes polymères micellaires pouvant former des gels. Ces sols-gels sont filtrables. Lorsque le bain de décapage est soumis à un traitement de récupération des oxydes de fer puis recyclé, la concentration du fer dans le bain usé concentré obtenu après élimination d'eau (classiquement par évaporation) est de 180 à 280 g/l selon les procédés utilisés (p. ex. RUTHNER ou LURGI), tandis que la concentration de silicium peut passer de 30-40 à 60 et plus mg/l dont environ 70 à 80% sous forme non-ionique et 20% à 30% sous forme ionique. Par ailleurs, une concenration supérieure du bain, qui favoriserait la formation de composés siliciques précipitables, n'est pas possible sans précipiter simultanément le fer, notamment $FeCl_2$, ce qui est évidemment indésirable.

Les présents inventeurs ont maintenant trouvé qu'il est possible de réduire fortement la concentration de composés du silicium dans le bain usé concentré au moyen d'une microfiltration tangentielle du bain, combinée avec une recirculation d'une partie du bain où les composés de silicium sont concentrés puis précipités.

L'invention a donc pour objet un procédé de séparation des composés de silicium contenus dans un bain de décapage chlorhydrique de pièces d'acier, procédé dans lequel le bain usé est recyclé après concentration par élimination.d'eau, notamment par évaporation de 20 à 50% en poids par exemple, et à hauteur de 30 à 40% de préférence, suivie d'un traitement en vue de la récupération des oxydes de fer, caractérisé en ce que l'on effectue une opération de séparation solide-liquide sur le bain concentré afin d'en séparer les composés du silicium sous forme non-ionique et ainsi les concentrer, et que l'on fait recirculer la majeure partie de la fraction de ce bain contenant ces composés de silicium concentrés pour favoriser la précipitation des composés du silicium sous forme nonionique, l'autre partie de ladite fraction étant évacuée.

Les composés siliciques ainsi précipités sont évacués en même temps qu'une partie du concentrat des composés du silicium sous forme non-ionique, mais avec seulement une partie négligeable du bain. Ainsi la fraction du bain concentré en recirculation contient une concentration en composés siliciques nettement plus élevée que le reste du bain tout en ayant la même concentration en fer, lequel n'est présent qu'à l'état ionique.

La séparation solide-liquide sur le bain concentré est effectuée notamment par micro-filtration tangentielle à l'aide d'une membrane ayant un seuil de coupure de 0,2 μm. Cette membrane est avantageusement en composite fibre carbone-carbone poreux comme le produit "LCL" commercialisé par la société Carbone Loiraine. Une telle membrane permet la séparation de la quasi totalité du silicium non ionique tout en n'ayant pas d'influence sur les composés du fer, c'est-à-dire une sélectivité à 100%.

De préférence la température du bain concentré est dans la plage de 50 à 90°C.

Avantageusement on agite la fraction de bain concentré en recirculation afin de favoriser la maturation des micelles de composés siliciques insolubles. Cet effet peut égalaient être obtenu par augmentation de l'acidité de cette fraction de bain. Il est d'autant plus prononcé que le temps passé par le bain concentré dans cette boucle de recirculation est important.

Comme on le comprend, l'invention consiste fondamentalement en une opération unique de traitement permettant à la fois la récupération du fer et l'élimination de la silice, associée à un choix judicieux de l'endroit de ce traitement dans la chaîne des opérations habituelles, à savoir à la sortie du concentrateur par élimination d'eau. On aura noté que c'est l'augmentation de la concentration en silice colloïdale (c'est-à-dire la forme non-ionique), qui est le facteur favorisant la précipitation de la fraction encore soluble des composés de la silice, à savoir la silice ionique. L'explication de ce phénomène n'est pas encore complètement élucidée par les inventeurs.

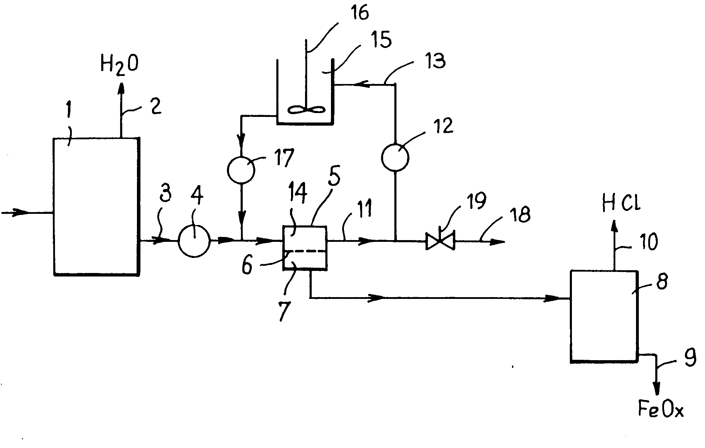

L'exemple suivant illustre l'invention en référence à la figure unique annexée montrant schématiquement une installation de traitement.

Depuis une ligne de décapage chlorhydrique de tôles d'acier, non représentée sur la figure on amène 5 m³/h de bain usé contenant 140 g/l de fer et 35 mg/l de silicium dans un concentrateur 1 où il est évaporé 2 d'environ 35% à température élevée. Le bain usé concentré 3 sortant de ce dispositif (3,15 m³/h à environ 70°C), contenant 215 g/l de fer et 53 mg/l de silicium, est introduit à l'aide d'une pompe 4 dans une enceinte de microfiltration tangentielle 5 (MFT) comprenant essentiellement une série de membranes 6 en composite carbone-carbone ayant un seuil de coupure de 0,2 μm qui la séparent en deux chambres. Le perméat ne contenant pratiquement plus de silicium non-ionique et environ 11 mg/l de composés de siliclum sous forme ionique est recueilli dans la chambre inférieure 7 à raison de 3,10 m³/h d'où il est dirigé vers un traitement de pyrohydrolyse 8 suivant le procédé de RUTHNER ou LURGI en vue de la récupération 9 des oxydes de fer, puis il est recyclé par la sortie 10 dans la ligne de décapage.

La plus grande partie du surnageant 11 concentré en composés de silicium insolubles sous forme de sol-gel, est mis en recirculation par des moyens 12,17 à raison de 0,65 m³/min dans un circuit en dérivation 13 de ligne partant de la chambre supérieure 14 de l'enceinte MFT 5 et aboutissant en amont de cette enceinte. Le restant du surnageant, représentant environ 2% du débit de perméat (0,05 m³/h dans l'exemple considéré), est évacué de l'installation par un circuit de fuite 18 muni de moyens 19 de régulation de ce débit de fuite. Le rapport entre le débit de fuite et le débit du perméat résulte d'un compromis entre les différents paramètres opératoires de l'installation. Un faible débit de fuite permet de récupérer une grande quantité de composés de silice, mais en contrepartie il nécessite un nettoyage fréquent de la membrane de micro-filtration. A surface de membrane égale, l'installation est donc plus longtemps arrêtée que dans le cas d'un débit de fuite élevée. Le débit de fuite doit donc être optimisé en vue d'obtenir une productivité satisfaisante de l'installation.

Le circuit de recirculation 13 servant à la concentration en silicium comprend utilement un récipient de réserve 15 muni d'un système d'agitation 16 afin de favoriser la maturation des micelles de composés siliciques insolubles ainsi que les moyens 12,17 pour faire circuler le bain. Il peut également comprendre des moyens pour augmenter l'acidité du bain, toujours pour favoriser la précipitation des composés de silicium.

Ainsi le procédé selon l'invention permet d'améliorer la pureté des oxydes de fer récupérés à partir du bain usé concentré et désilicié moyennant des pertes relativement faibles de bain concentré en silicium qui est rejeté.

Bien entendu, la micro-filtration tangentielle n'est qu'un exemple de méthode de séparation utilisable. Toute autre méthode de séparation solide-liquide ayant un seuil de coupure adapté à la filtration des composés siliciques peut être employée.

## Revendications

1. Procédé de séparation des composés de silicium contenus dans un bain de décapage chlorhydrique de pièces d'acier, procédé dans lequel le bain usé est recyclé après concentration par élimination d'eau, suivie d'un traitement en vue de la récupération des composés de fer, caractérisé en ce que l'on effectue une opération de séparation solide-liquide sur le bain concentré afin d'en séparer les composés du silicium sous forme non-ionique et ainsi les concentrer, et que l'on fait recirculer la majeure partie de la fraction de ce bain contenant ces composés de silicium concentrés afin de favoriser la précipitation des composés du silicium sous forme non-ionique, l'autre partie de ladite fraction étant évacuée.

2. Procédé selon la revendication 1, caractérisé en ce que l'opération de séparation solide-liquide effectuée sur le bain concentré est une opération de micro-filtration tangentielle.

3. Procédé selon la revendication 2, caractérisé en ce que la microfiltration tangentielle est effectuée à l'aide d'une membrane ayant un seuil de coupure de 0,2 μm.

4. Procédé selon la revendication 2, caractérisé en ce que la membrane est en composite carbone-carbone.

5. Procédé selon la revendication 1, caractérisé en ce que la température du bain concentré est de 50 à 90°C.

6. Procédé selon l'une quelconque des revendications 1 à 5, caractérisé en ce que l'on agite la fraction de bain en recirculation.

7. Procédé selon l'une quelconque des revendications 1 à 6, caractérisé en ce qu'on augmente l'acidité de la fraction de bain en recirculation.

Office européen
des brevets

**RAPPORT DE RECHERCHE EUROPEENNE**

Numero de la demande

EP    91 47 0037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | PATENT ABSTRACTS OF JAPAN<br>vol. 9, no. 12 (C-261)(1735) 18 Janvier 1985<br>& JP-A-59 162 139 ( TADAYOSHI KARASAWA ) 13 Septembre 1984<br>* abrégé * | 1-6 | C23G1/36 |
| Y | PATENT ABSTRACTS OF JAPAN<br>vol. 8, no. 158 (C-238)10 Août 1984<br>& JP-A-59 073 439 ( SHIN NIPPON SEITETSU K.K. ) 25 Avril 1984<br>* abrégé * | 1-6 | |
| A | PATENT ABSTRACTS OF JAPAN<br>vol. 9, no. 21 (C-263)(1744) 29 Janvier 1985<br>& JP-A-59 162 902 ( TADAYOSHI KARASAWA ) 26 Septembre 1984<br>* abrégé * | | |
| A | PATENT ABSTRACTS OF JAPAN<br>vol. 13, no. 158 (C-586)(3506) 17 Avril 1989<br>& JP-A-63 315 523 ( KEMIRAITO KOGYO K.K. ) 23 Décembre 1989<br>* abrégé * | | **DOMAINES TECHNIQUES RECHERCHES (Int. Cl.5 )**<br><br>C23G |

Le présent rapport a été établi pour toutes les revendications

| Lieu de la recherche | Date d'achèvement de la recherche | Examinateur |
|---|---|---|
| LA HAYE | 08 AVRIL 1992 | TORFS F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P0402)